# EUROPÄISCHE PATENTSCHRIFT

(11) **EP 1 640 200 B1**
(45) Veröffentlichungstag und Bekanntmachung des Hinweises auf die Patenterteilung: **12.03.2008**
(21) Anmeldenummer: 05015181.0
(22) Anmeldetag: 13.07.2005
(51) Int. Cl.: B60J 7/185

(54) **Verdeckverschluss für ein Fahrzeug**
Latch for a top of a vehicle
Dispositif de verrouillage pour toit de véhicule

(30) Priorität: 23.09.2004 DE 102004046098
(43) Veröffentlichungstag der Anmeldung: 29.03.2006
(73) Patentinhaber: Dr.Ing. h.c. F. Porsche Aktiengesellschaft, 70435 Stuttgart (DE)
(72) Erfinder: Pfertner, Kurt, 71254 Ditzingen (DE); Ranft, Detlev, 76275 Ettlingen (DE); Popp, Hartmut, 95189 Köditz (DE)

(56) Entgegenhaltungen:
- DE-A1- 10 300 881
- DE-A1- 19 721 229
- PATENT ABSTRACTS OF JAPAN Bd. 2000, Nr. 03, 30. März 2000 (2000-03-30) & JP 11 334379 A (ASMO CO LTD), 7. Dezember 1999 (1999-12-07)

## Beschreibung

Die Erfindung betrifft einen Verdeckverschluss für ein Fahrzeug mit einem kulissengesteuerten Verschlusshaken, der über Führungsmittel aus einer Schließstellung in eine Offenstellung verlagerbar ist, wobei der Verschlusshaken mit zumindest einer Hakenführung zusammenwirkt, die mit einer Motor-Getriebeeinheit in Wirkverbindung steht.

Ein eine gute Funktion aufweisender Verdeckverschluss der eingangs genannten Gattung geht aus der DE 197 21 229 A1 hervor. Bei dieser Anordnung ist ein sich in Fahrzeuglängsrichtung erstreckender Getriebemotor an einer Seite des Verschlusshakens angeordnet und über ein querverlaufendes Übertragungselement mit einer nachgeschalteten Getriebeeinheit verbunden, die sich auf der gegenüberliegenden Seite des Verschlusshakens erstreckt. Die Getriebeeinheit wird durch ein zweistufiges Stirnradgetriebe gebildet.

Die DE 103 00 881 A1 zeigt einen Verdeckverschluss für ein Fahrzeug, mit einem kulissengesteuerten, sich in Fahrzeuglängsrichtung erstreckenden Verschlusshaken, der über Führungsmittel aus einer Schließstellung in eine Offenstellung verlagerbar ist, wobei der Verschlusshaken mit zumindest einer Hakenführung zusammenwirkt, die mit einer lediglich an einer Längsseite des Verschlusshakens verlaufenden Motor-Getriebeeinheit in Wirkverbindung steht. Bei dieser Anordnung verläuft der Elektromotor der Motor-Getriebeeinheit parallel zu einer Längsmittelebene des Fahrzeuges und es ist lediglich eine zweistufige Getriebeeinheit vorgesehen.

Aufgabe der Erfindung ist es, einen Verdeckverschluss der eingangs genannten Gattung so weiterzubilden, dass er einen vereinfachten Aufbau und eine kompaktere Bauweise aufweist.

Erfindungsgemäß wird diese Aufgabe durch die Merkmale des Anspruchs 1 gelöst. Weitere die Erfindung in vorteilhafter Weise ausgestaltende Merkmale sind in den Unteransprüchen enthalten.

Die mit der Erfindung hauptsächlich erzielten Vorteile sind darin zu sehen, dass die sich lediglich an einer Längsseite des Verschlusshakens erstreckende Motor-Getriebeeinheit einen vereinfachten Aufbau aufweist, wobei durch den quer zur Längsmittelebene des Fahrzeuges ausgerichteten Elektromotor und die dreifach untersetzte Getriebeeinheit eine kompaktere Bauweise erzielt wird. Durch den kulissengesteuerten Verschlusshaken und die spezielle Ausbildung der Kulissenbahn wird zudem ein vergrößerter Holweg des Verdeckverschlusses in X-Richtung erzielt. Durch die Anordnung einer Notbetätigungsschnecke, die im Normalbetrieb des Verdeckverschlusses ein Hohlrad des Planetengetriebes festsetzt, wird eine relativ einfache manuelle Notbetätigung für den Verdeckverschluss geschaffen. Durch die Kombination Kegelradgetriebe, Schneckengetriebe und Planetengetriebe lässt sich eine relativ hohe Gesamtübersetzung darstellen.

Ein Ausführungsbeispiel der Erfindung ist in den Zeichnungen dargestellt und wird im Folgenden näher erläutert.
Es zeigt
- Fig. 1: eine perspektivische Ansicht von schräg vorne auf einen Verdeckverschluss für ein Fahrzeug,

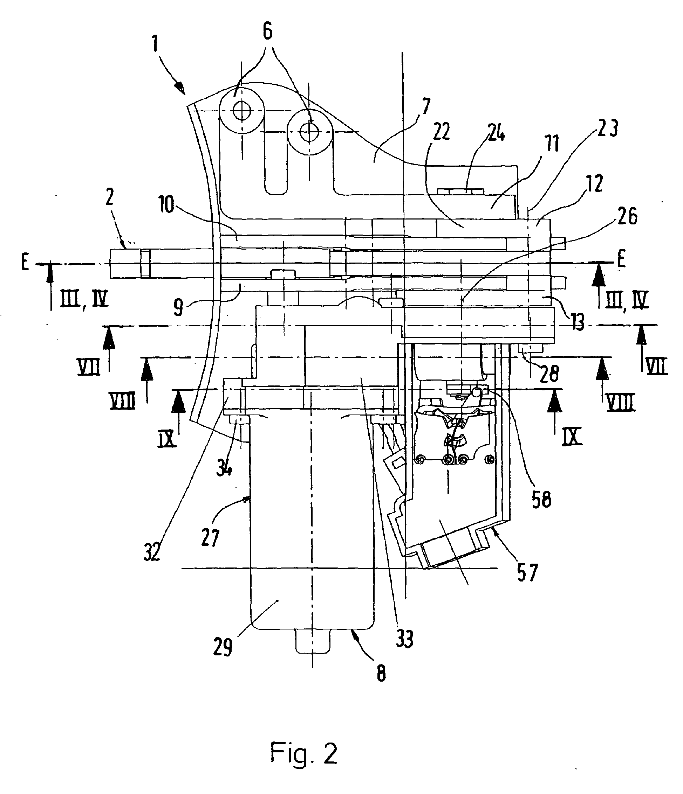

- Fig. 2: eine Draufsicht auf den Verdeckverschluss,
- Fig. 3: einen Schnitt nach der Linie III-III der Fig. 2, wobei der Verschlusshaken eine verriegelte Stellung einnimmt,
- Fig. 4: einen Schnitt ähnlich Fig. 3 mit dem Verschlusshaken in entriegelter Stellung,

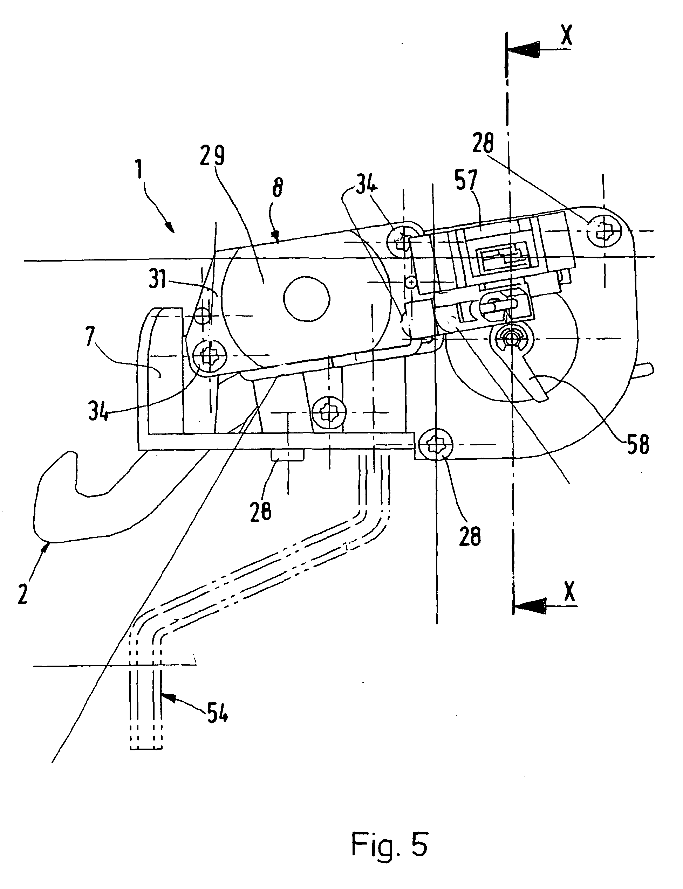

- Fig. 5: eine Ansicht von der Seite auf den Verdeckverschluss, wobei ein Notbetätigungsschlüssel strichpunktiert dargestellt ist,

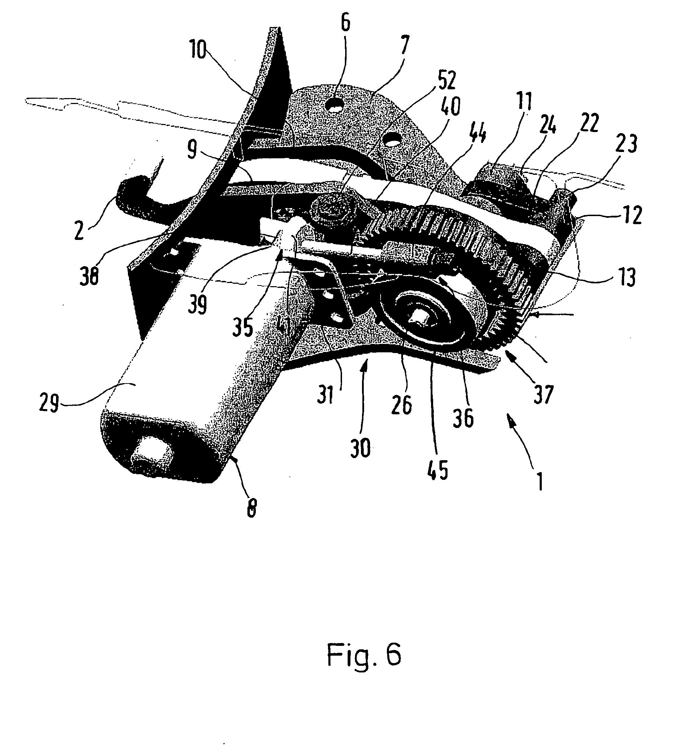

- Fig. 6: eine perspektivische Ansicht von schräg hinten auf den Verdeckverschluss, wobei die Motorgetriebeeinheit näher dargestellt ist, jedoch ohne das Getriebegehäuse,
- Fig. 7: einen Schnitt nach der Linie VII-VII der Fig. 2 in größerer Darstellung,
- Fig. 8: einen Schnitt nach der Linie VIII-VIII der Fig. 2 in größerer Darstellung,

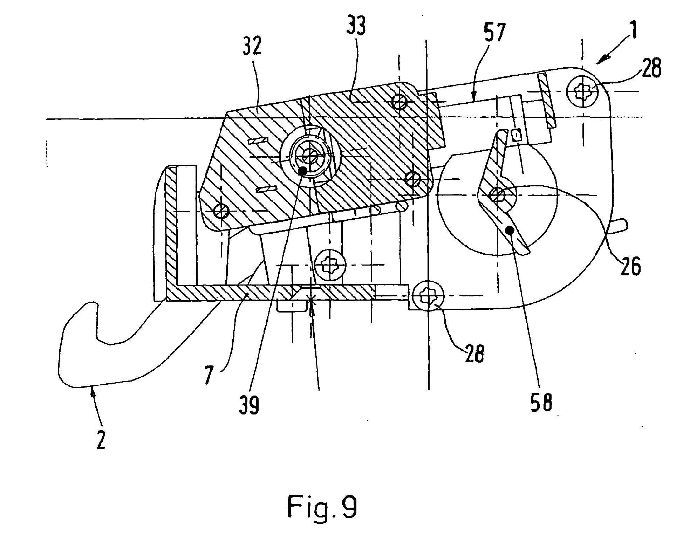

- Fig. 9: einen Schnitt nach der Linie IX-IX der Fig. 2 in größerer Darstellung,

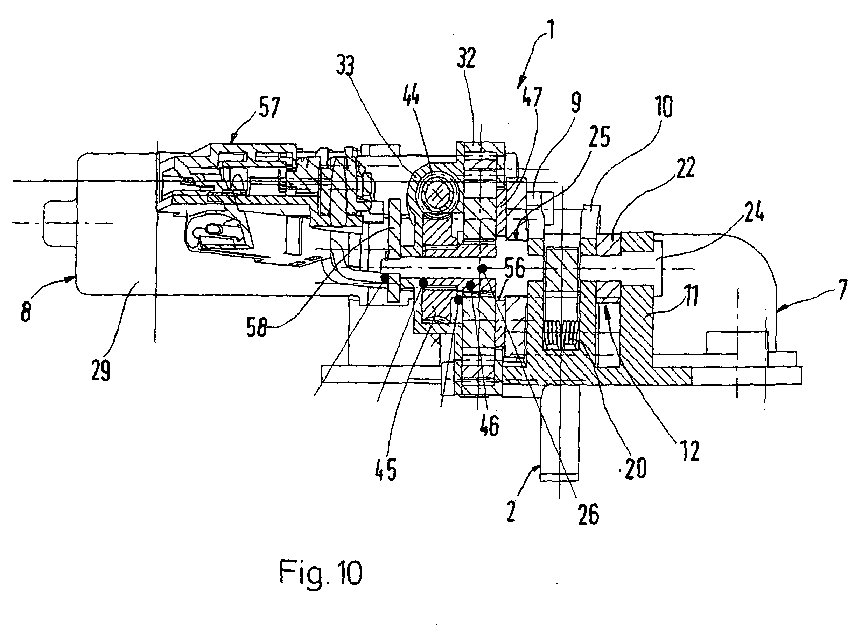

- Fig. 10: einen Schnitt nach der Linie X-X der Fig. 5.

Ein Verdeckverschluss 1 dient zum Festsetzen eines Cabrioletverdeckes über einen bewegbaren Verschlusshaken 2 an einer an einem Windschutzrahmen 3 angeordneten Aufnahme 4, wobei der Verdeckverschluss 1 mit einem formsteifen vorderen Verdeckrahmen 5 des Verdecks über Schraubmittel verbunden ist, die in Bohrungen 6 des Verdeckverschlusses 1 gehalten sind.

Der Verdeckverschluss 1 umfasst einen an der Unterseite des vorderen formsteifen Verdeckrahmens 5 befestigten Grundträger 7, einen in seiner Schließstellung (Verriegelungsstellung A) mit dem Windschutzscheibenrahmen 3 in Wirkverbindung stehenden Verschlusshaken 2 sowie eine Motor-Getriebeeinheit 8 zur Bewegung des Verschlusshakens 2 von der Schließstellung in die Offenstellung (Entriegelungsstellung B) und umgekehrt. Im Ausführungsbeispiel ist ein zentraler, elektromotorisch angetriebener Verdeckverschluss 1 vorgesehen, mittels dem das Cabrioletverdeck in Längsrichtung des Personenkraftwagens gegen den Windschutzscheibenrahmen 3 gezogen und in der gespannten Verdeckstellung gehalten ist.

Der beispielsweise durch ein Aluminium-Druckgussteil gebildete Grundträger 7 weist beabstandet angeordnete, sich in Fahrzeuglängsrichtung erstreckende und vertikal ausgerichtete Lagerstege 9, 10, 11 zum Festlegen der Motor-Getriebeeinheit 8 und zur Lagerung von Hakenführungen 12, 13 auf.

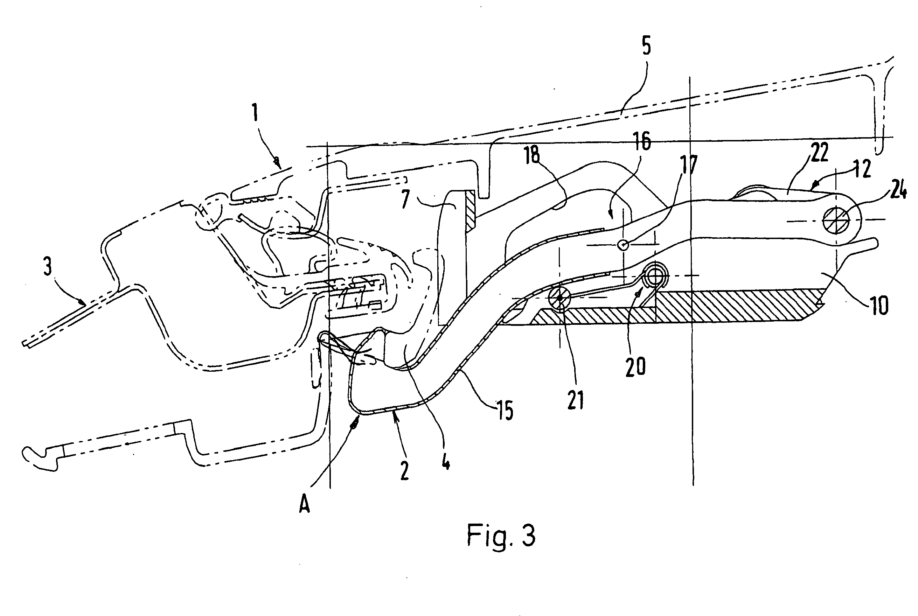

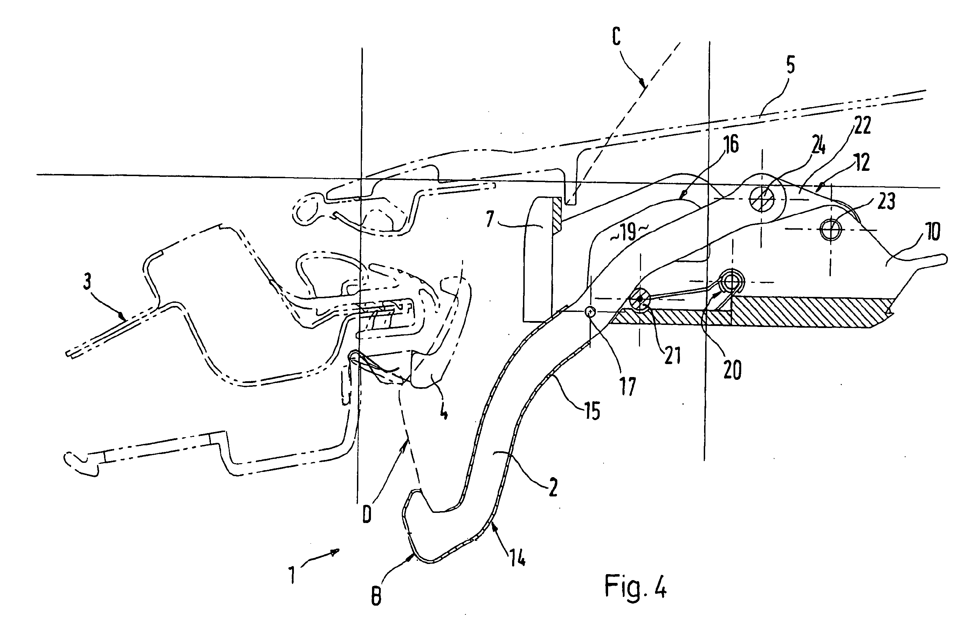

Der Verschlusshaken 2 ist in einem vorneliegenden Bereich 14 mit einer Kunststoffumspritzung 15 z.B. aus POM versehen (Fig. 3 und 4). In einem mittleren Bereich seiner Längserstreckung ist eine Kulissenführung 16 für den Verschlusshaken 2 vorgesehen, wobei ein seitlich abgestellter Spannstift 17 des Verschlusshakens 2 mit zumindest einer Kulissenbahn 18 des Grundträgers 7 zusammenwirkt. Die aus mehreren aneinandergesetzten Bahnabschnitten zusammengesetzte Kulissenbahn 18 wird gem. den Fig. 3 und 4 durch die äußere Begrenzung einer an den Lagerstegen 9, 10 angeordneten Öffnung 19 gebildet. Je nach konstruktiver Gestaltung der Kulissenbahn 18 wird das Einlaufverhalten des Verschlussverhakens 2 beim Verriegeln beeinflusst. Die Einlaufkurven für den vorderen Verdeckabschnitt 5 und das vordere Ende des Verschlusshakens 2 sind in Fig. 4 gestrichelt dargestellt, wobei die Einlaufkurve C dem Verdeckabschnitt 5 und die Einlaufkurve D dem Verschlusshaken 2 zugeordnet sind.

Der zwischen den beabstandeten Lagerstegen 9, 10 aufgenommene Verschlusshaken 2 wird durch ein Federelement 20 und eine Druckrolle 21 von unten gegen die Kulissenbahn 18 gedrückt. Das Federelement 20 wird im Ausführungsbeispiel durch eine Doppelschenkelfeder gebildet, die auf einem querverlaufenden Bolzen des Grundträgers 7 gelagert ist. An einem querverlaufenden obenliegenden Ende der Doppelschenkelfeder sitzt die Druckrolle 21, die von unten gegen den Verschlusshaken 2 drückt, wodurch der seitlich vorstehende Spannstift 17 gegen die Kulissenbahn 18 gedrückt wird.

Das hintere Ende des Verschlusshakens 2 wirkt mit zumindest einer Hakenführung 12, 13 zusammen. Im Ausführungsbeispiel sind zwei unterschiedlich ausgebildete Hakenführungen 12, 13 für den Verschlusshaken 2 vorgesehen. Die der Motor-Getriebeeinheit 8 abgewandte Hakenführung 12 wird durch einen länglichen Antriebshebel 22 gebildet, der an seinem einen Ende über einen querverlaufenden Nietbolzen 23 mit dem hinteren Ende des Verschlusshakens 2 verbunden ist. Das andere vorne liegende Ende des Antriebshebels 22 ist drehbar mit einem Gelenkbolzen 24 verbunden, der einerseits am mittleren Lagersteg 10 und andererseits am äußeren Lagersteg 11 aufgenommen ist. Der Antriebshebel 22 ist im Raum zwischen den beiden Lagerstegen 10, 11 platziert. Die der Motorgetriebeeinheit 8 zugewandte Hakenführung 13 weist eine scheibenförmige Kontur auf und ist über den gemeinsamen Nietbolzen 23 mit dem hinteren Ende des Verschlusshakens 2 und über einen Mehrkant 25 (Sechskant) mit der Getriebeabtriebswelle 26 kraftübertragend verbunden. Durch die Motor-Getriebeeinheit 8 wird die Hakenführung 12, 13 beim Öffnungs- und Schließvorgang des Verdeckverschlusses 1 um ca. 160° verschwenkt, wobei am Grundträger 7 mechanische Anschläge für beide Endlagen ausgebildet sind.

Die Motor-Getriebeeinheit 8 wird durch ein vorgefertigtes Modul 27 gebildet, das von einer Seite her auf einen äußeren Lagersteg 9 des Grundträgers 7 aufgesetzt und über mehrere Schrauben 28 an diesem befestigt ist.

Erfindungsgemäß umfasst die Motor-Getriebeeinheit 8 einen quer zur Längsmittelebene E-E des Fahrzeuges ausgerichteten Elektromotor 29, der über eine dreifach untersetzte Getriebeeinheit 30 mit einer Hakenführung 12, 13 für den Verschlusshaken 2 zusammenwirkt. Im Ausführungsbeispiel ist die Motor-Getriebeeinheit 8 in Fahrtrichtung gesehen linksseitig am Grundträger 7 vorgesehen.

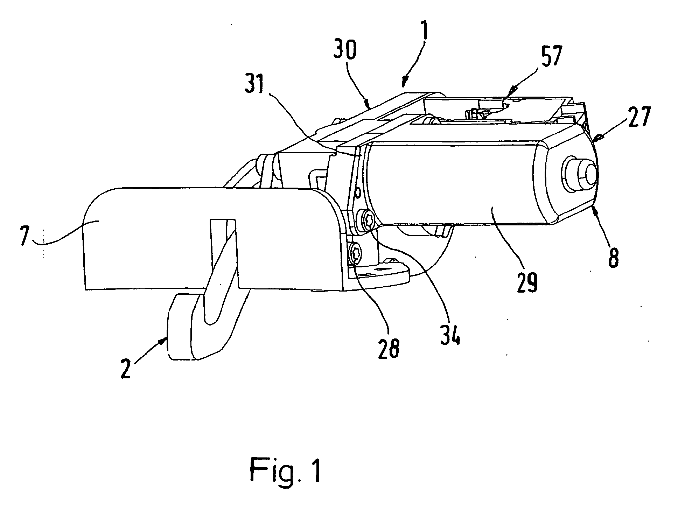

Der Elektromotor 29 ist über einen rechteckförmigen Anlageflansch 31 an die Außenseite eines mehrteiligen Getriebegehäuses 32, 33 herangeführt und mit diesen durch Schrauben 34 fest verbunden (Fig. 1). Die Getriebeeinheit 30 setzt sich aus einem Kegelradgetriebe 35, einem damit verbundenen Schneckengetriebe 36 und einem nachgeschalteten Planetengetriebe 37 zusammen, wobei alle Getriebe 35, 36, 37 in dem gemeinsamen mehrteiligen Getriebegehäuse 32, 33 untergebracht sind.

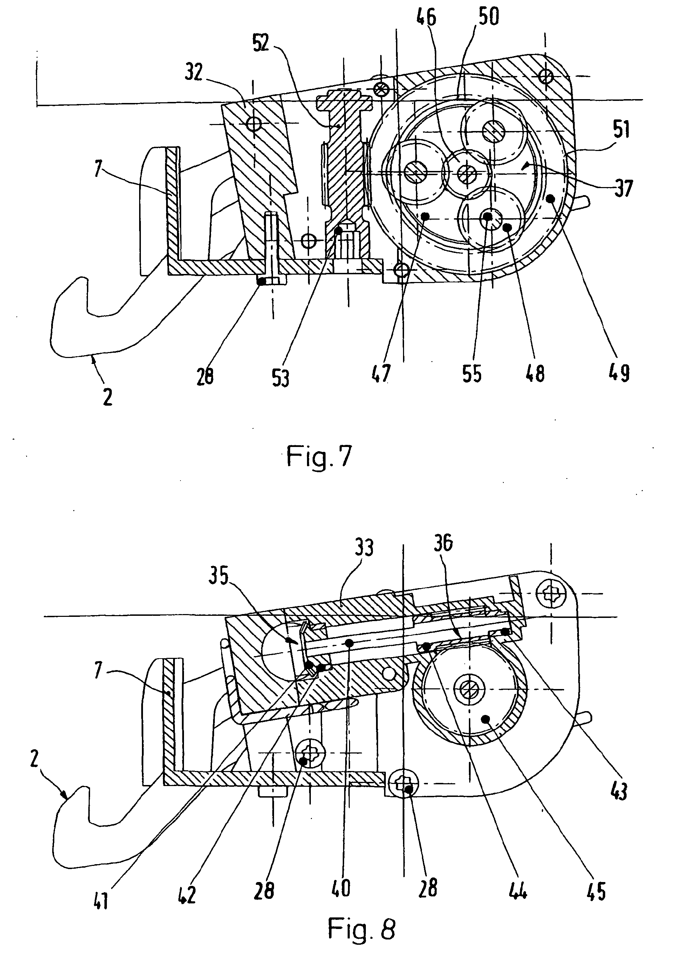

Das Kegelradgetriebe 35 umfasst ein an einer Abtriebswelle 38 des Elektromotors 29 angeordnetes Antriebskegelrad 39 und ein auf einer Schneckenwelle 40 aufgeschrumpftes Abtriebskegelrad 41, wobei mittels des Kegelradsatzes eine 90°Umlenkung des Kraftflusses erfolgt. Die Abtriebswelle 38 des Elektromotors 29 verläuft etwa rechtwinkelig zur Längsmittelebene E-E des Fahrzeuges und ist etwa horizontal ausgerichtet, wogegen die Schneckenwelle 40 parallel und mit Abstand zur Längsmittelebene E-E verläuft. Im Längsschnitt gesehen (Fig. 8) steigt die Schneckenwelle 40 nach hinten hin geringfügig an. Die Schneckenwelle 40 ist über zwei verdrehfeste Lager 42, 43 im Getriebegehäuse 32, 33 gelagert. An dem dem Abtriebskegelrad 41 entgegengesetzten Ende der Schneckenwelle 40 ist eine längliche Schnecke 44 angeordnet, die ein darunterliegendes Schneckenrad 45 des Schneckengetriebes 36 antreibt.

Der Schneckenradsatz überträgt das Moment auf ein Sonnenrad 46 des Planetengetriebes 37, wobei das Sonnenrad 46 freidrehend auf der Getriebeabtriebswelle 26 gelagert ist. Das Schneckenrad 45 ist auf das Sonnenrad 46 aufgesteckt und verdrehfest mit diesem verbunden. Die quer zur Fahrzeuglängsmittelebene E-E verlaufende Getriebeabtriebswelle 26 ist an ihrem einen Ende im Getriebegehäuse 32, 33 gelagert. Das gegenüberliegende Ende der Getriebeabtriebswelle 26 ist am Lagersteg 9 des Grundträgers 7 drehbar gelagert.

Das Planetengetriebe 37 umfasst neben dem Sonnenrad 46 mehrere an einem Planetenträger 47 drehbar gelagerte Planetenräder 48 sowie ein äußeres Hohlrad 49 (Fig. 7). Das Hohlrad 49 weist eine Innenverzahnung 50 und zusätzlich eine Außenverzahnung 51 auf. Im Normalbetrieb des Verdeckverschlusses 1 wird das Hohlrad 49 festgehalten, da die Außenverzahnung 51 des Hohlrades 49 mit einer stehend angeordneten Notbetätigungsschnecke 52 kämmt. Die Notbetätigungsschnecke 52 erstreckt sich im Raum zwischen dem Abtriebskegelrad 41 und dem Hohlrad 49. Die Notbetätigungsschnecke 52 ist im Getriebegehäuse 32, 33 gelagert und weist an ihrem unteren, dem Fahrgastraum zugekehrten Ende einen Innenmehrkant 53 auf, in den vom Fahrgastraum her ein abgekröpfter Notbetätigungsschlüssel 54 einsteckbar ist. Der Notbetätigungsschlüssel 54 ist im Ausführungsbeispiel innenseitig in einer nicht näher dargestellten Abdeckung des Grundträgers 7 eingeklipst, wobei die Abdeckung vom Fahrgastraum her auf den Grundträger 7 aufgesetzt ist.

Das innenliegende Sonnenrad 46 treibt die außenliegenden Planetenräder 48 an, wobei die Planetenräder 48 zusätzlich mit der Innenverzahnung 50 des feststehenden Hohlrades 49 kämmen. Die Planetenräder 48 sind jeweils auf querverlaufenden Nadelrollen 55 des Planetenträgers 47 gelagert. Der Planetenträger 47 sitzt auf einem Mehrkant 56 (z.B. Sechskant) der Getriebeabtriebswelle 26. Direkt neben dem Mehrkant für den Planetenträger 47 ist auf der Getriebeabtriebswelle 26 ein weiterer Mehrkant 25 (z.B. Sechskant) für die Hakenführung 13 angeordnet. Die Nadelrollen 55 des Planetenträgers 47 greifen in die Hakenführung 13 ein und übertragen dabei das Moment auf die Hakenführung 13. Diese ist über einen Mehrkant mit der Getriebeabtriebswelle 26 gekoppelt. Dadurch dreht sich die Getriebeabtriebswelle 26 genauso schnell wie die Hakenführung 12, 13. Die Hakenführung 12, 13 überträgt aufgrund eines Hebelarmes die Kraft auf den Verschlusshaken 2.

Die Abschaltung des Elektromotors 29 und die Abfrage, ob der Verdeckverschluss 1 eine Endlage erreicht hat, wird über eine Schalterbaugruppe 57 realisiert. Die Schalterbaugruppe 57 sitzt am Getriebegehäuse 32, 33. Über eine Nockenscheibe 58, welche auf der Getriebeabtriebswelle 26 endseitig verdrehfest befestigt ist, werden Mikroschalter zur Anzeige der Endlage in der Schalterbaugruppe 57 angesteuert.

## Patentansprüche

1. Verdeckverschluss (1) für ein Fahrzeug, mit einem kulissengesteuerten, sich in Fahrzeuglängsrichtung erstreckenden Verschlusshaken (2), der über Führungsmittel (17, 18) aus einer Schließstellung in eine Offenstellung verlagerbar ist, wobei der Verschlusshaken (2) mit zumindest einer Hakenführung (12, 13) zusammenwirkt, die mit einer lediglich an einer Längsseite des Verschlusshakens (2) verlaufenden Motor-Getriebeeinheit (8) in Wirkverbindung steht, und dass das Verdeck mittels des Verdeckverschlusses (1) in Längsrichtung des Personenkraftwagens gegen den Windschutzscheibenrahmen (3) gezogen und in der gespannten Verdeckstellung gehalten ist, **dadurch gekennzeichnet, dass** die Motor-Getriebeeinheit (8) einen quer zur Längsmittelebene (E-E) des Fahrzeuges ausgerichteten Elektromotor (29) umfasst, der über eine dreifach untersetzte Getriebeeinheit (30) mit einer Hakenführung (12, 13) des Verschlusshakens (2) zusammenwirkt, dass sich die Getriebeeinheit (30) aus einem Kegelradgetriebe (35), einem damit verbundenen Schneckengetriebe (36) und einem nachgeschalteten Planetengetriebe (37) zusammensetzt, wobei sämtliche Getriebe (35, 36, 37) in einem gemeinsamen mehrteiligen Getriebegehäuse (32, 33) untergebracht sind und dass das Kegelradgetriebe (35) ein an einer Abtriebswelle (38) des Elektromotors (29) angeordnetes Antriebskegelrad (39) und ein auf einer Schneckenwelle (40) aufgeschrumpftes Abtriebskegelrad (41) umfasst, wobei mittels des Kegelradsatzes (39, 41) eine 90°-Umlenkung des Kraftflusses erfolgt.

2. Verdeckverschluss nach Anspruch 1, **dadurch gekennzeichnet, dass** die Schneckenwelle (40) über zwei verdrehfeste Lager (42, 43) im Getriebegehäuse (32, 33) gelagert ist und dass an dem dem Abtriebskegelrad (41) entgegengesetzten Ende der Schneckenwelle (40) eine Schnecke (44) angeordnet ist, die ein Schneckenrad (45) des Schneckengetriebes (36) antreibt.

3. Verdeckverschluss nach den Ansprüchen 1 und 2, **dadurch gekennzeichnet, dass** der Schneckenradsatz (44, 45) des Schneckengetriebes (36) das Moment auf ein Sonnenrad (46) des Planetengetriebes (37) überträgt, das freidrehend auf einer Getriebeabtriebswelle (26) gelagert ist.

4. Verdeckverschluss nach einem der vorangegangenen Ansprüche, **dadurch gekennzeichnet, dass** ein Hohlrad (49) des Planetengetriebes (37) im Normalbetrieb des Verdeckverschlusses (1) durch eine Notbestätigungsschnecke (52) festgestellt ist.

5. Verdeckverschluss nach einem der vorangegangenen Ansprüche, **dadurch gekennzeichnet, dass** der Abtrieb des Planetengetriebes (37) über einen Planetenträger (47) erfolgt, der das Moment direkt auf die Hakenführung (12, 13) weiterleitet.

6. Verdeckverschluss nach einem der vorangegangenen Ansprüche, **dadurch gekennzeichnet, dass** die Hakenführung (12, 13) über einen Mehrkant mit einer Getriebeabtriebswelle (26) verbunden ist.

7. Verdeckverschluss nach einem der vorangegangenen Ansprüche, **dadurch gekennzeichnet, dass** der kulissengesteuerte Verschlusshaken (2) über eine Doppelschenkelfeder (20) und eine Druckrolle (21) von unten gegen eine Kulissenbahn (18) gedrückt wird.

## Claims

1. Convertible top catch (1) for a vehicle, with a slotted-guide-controlled catch hook (2) which extends in the longitudinal direction of the vehicle and can be moved from a closed position to an open position by guide means (17, 18), with the catch hook (2) interacting with at least one hook guide (12, 13) which is operatively connected to a motor/gear mechanism unit (8) which runs only on a longitudinal side of the catch hook (2), and with the convertible top being drawn towards the windscreen frame (3) in the longitudinal direction of the passenger car and held in the stretched convertible top position by means of the convertible top catch (1), **characterized in that** the motor/gear mechanism unit (8) comprises an electric motor (29) which is oriented transverse to the longitudinal centre plane (E-E) of the vehicle and interacts with a hook guide (12, 13) of the catch hook (2) by means of a triple step-down gear mechanism unit (30), **in that** the gear mechanism unit (30) comprises a bevel gear mechanism (35), a worm gear mechanism (36) which is connected to it, and a planetary gear mechanism (37) which is connected downstream, with all the mechanisms (35, 36, 37) being accommodated in a common multipartite gear mechanism housing (32, 33), and **in that** the bevel gear mechanism (35) comprises a drive bevel gear (39), which is arranged on an output shaft (38) of the electric motor (29), and an output bevel gear (41) which is shrink-fitted onto a worm shaft (40), with a 90° deflection of the force flux being effected by means of the bevel gear set (39, 41).

2. Convertible top catch according to Claim 1, **characterized in that** the worm shaft (40) is mounted in the gear mechanism housing (32, 33) by means of two rotationally fixed mounts (42, 43), and **in that** a worm (44) which drives a worm gear (45) of the worm gear mechanism (36) is arranged at that end of the worm shaft (40) which is opposite the output bevel gear (41).

3. Convertible top catch according to Claims 1 and 2, **characterized in that** the worm gear set (44, 45) of the worm gear mechanism (36) transmits the torque to a sun gear (46) of the planetary gear mechanism (37), which sun gear is mounted in a freely rotating manner on a gear mechanism output shaft (26).

4. Convertible top catch according to one of the preceding claims, **characterized in that** an internal gear (49) of the planetary gear mechanism (37) is fixed by an emergency operation worm (52) during normal operation of the convertible top catch (1).

5. Convertible top catch according to one of the preceding claims, **characterized in that** the power is output from the planetary gear mechanism (37) by means of a planet carrier (47) which passes the torque directly to the hook guide (12, 13).

6. Convertible top catch according to one of the preceding claims, **characterized in that** the hook guide (12, 13) is connected to a gear mechanism output shaft (26) by means of a polygon.

7. Convertible top catch according to one of the preceding claims, **characterized in that** the slotted-guide-controlled catch hook (2) is pressed against a slotted-guide track (18) from below by means of a double-leg spring (20) and a pressure roller (21).

## Revendications

1. Dispositif (1) de verrouillage de capote pour un véhicule, avec un crochet de verrouillage (2) s'étendant dans la direction longitudinale du véhicule, commandé par coulisse et pouvant être déplacé d'une position fermée dans une position ouverte par l'intermédiaire de moyens de guidage (17, 18), sachant que le crochet de verrouillage (2) coopère avec au moins un guide de crochet (12, 13) qui est fonctionnellement relié à un ensemble moteur-transmission (8) s'étendant sur un seul côté longitudinal du crochet de verrouillage (2), et sachant que la capote est, au moyen du dispositif (1) de verrouillage de capote, tirée dans la direction longitudinale de la voiture particulière contre le cadre de pare-brise (3) et maintenue en position tendue, **caractérisé en ce que** l'ensemble moteur-transmission (8) comprend un moteur électrique (29) orienté transversalement au plan médian longitudinal (E-E) du véhicule, qui coopère par l'intermédiaire d'un ensemble de transmission (30) à triple démultiplication avec un guide de crochet (12, 13) du crochet de verrouillage (2), **en ce que** l'ensemble de transmission (30) est composé d'un engrenage conique (35), d'un engrenage (36) à vis sans fin relié au précédent et d'un engrenage planétaire (37) relié en aval, les engrenages (35, 36, 37) étant tous logés dans un boîtier d'engrenages commun (32, 33) en plusieurs parties, et **en ce que** l'engrenage conique (35) comprend une roue conique menante (39) disposée sur un arbre de sortie (38) du moteur électrique (29) et une roue conique de sortie (41) frettée sur un arbre (40) de vis sans fin, sachant que le jeu de roues coniques (39, 41) effectue un renvoi du flux de force à 90°.

2. Dispositif de verrouillage de capote selon la revendication 1, **caractérisé en ce que** l'arbre (40) de vis sans fin est monté dans le boîtier d'engrenages (32, 33) par l'intermédiaire de deux paliers (42, 43) bloqués en rotation, et **en ce qu'**une vis sans fin (44), qui entraîne une roue à vis (45) de l'engrenage (36) à vis sans fin, est disposée à l'extrémité de l'arbre (40) de vis sans fin qui est opposée à la roue conique de sortie (41).

3. Dispositif de verrouillage de capote selon les revendications 1 et 2, **caractérisé en ce que** le jeu de roues (44, 45) de l'engrenage (36) à vis sans fin transmet le couple à une roue solaire (46) de l'engrenage planétaire (37) qui est montée librement rotative sur un arbre (26) de sortie de transmission.

4. Dispositif de verrouillage de capote selon l'une des revendications précédentes, **caractérisé en ce qu'**une couronne (49) de l'engrenage planétaire (37) est, pendant le fonctionnement normal du dispositif (1) de verrouillage de capote, immobilisée par une vis sans fin (52) d'actionnement de secours.

5. Dispositif de verrouillage de capote selon l'une des revendications précédentes, **caractérisé en ce que** la sortie de l'engrenage planétaire (37) s'effectue par l'intermédiaire d'un porte-satellites (47) qui transmet le couple directement sur le guide de crochet (12, 13).

6. Dispositif de verrouillage de capote selon l'une des revendications précédentes, **caractérisé en ce que** le guide de crochet (12, 13) est relié à un arbre (26) de sortie de transmission par l'intermédiaire d'un multipans.

7. Dispositif de verrouillage de capote selon l'une des revendications précédentes, **caractérisé en ce que** le crochet de verrouillage (2) commandé par coulisse est pressé par en dessous contre une coulisse (18) par l'intermédiaire d'un ressort (20) à double branche et d'un galet de pression (21).
